# EUROPEAN PATENT APPLICATION

(11) **EP 4 442 491 A1**
(43) Date of publication of application: **09.10.2024**
(21) Application number: 22900675.4
(22) Date of filing: 02.12.2022
(51) Int. Cl.: B60L 53/302, B60L 53/16

(54) **TERMINAL COOLING STRUCTURE, AND DIRECT-CURRENT CHARGING DEVICE COOLING SYSTEM**

(30) Priority: 02.12.2021 CN 202111461756
(71) Applicant: Changchun Jetty Automotive Technology Co., Ltd., Changchun City, Jilin Province 130000 (CN)
(72) Inventor: WANG, Chao, Changchun City, Jilin 130000 (CN)
(74) Representative: Dehns
(86) International application number: PCT/CN2022/136190
(87) International publication number: WO 2023/098871

(57) **Abstract**

A terminal cooling structure and a cooling system for a direct-current charging device. The terminal cooling structure includes a connecting tube, conductive terminals, and a cooling tube, where the conductive terminals have sealed cavities, and at least one end of the cooling tube is disposed in the sealed cavity; and at least two conductive terminals are provided, each of the conductive terminals is provided with a connecting hole, and the connecting holes communicate with each other by the connecting tube. According to the present application, the cooling tubes are disposed in the conductive terminals, and the sealed cavities are connected to each other by water pipe joints, such that the terminal cooling structure forms a complete loop and may quickly and effectively reduce the temperature of the terminals. With the structure in which cooling liquid enters the sealed cavity from an end opening of the cooling tube and flows out of the sealed cavity from the connecting tube, the contact between the cooling liquid and the inside of the conductive terminal is more sufficient, achieving higher cooling efficiency. With the water pipe joints, the connecting tube can be mounted more conveniently and sealed more completely. A temperature sensor can monitor the cooling effect on the conductive terminals, and can provide a reference for a worker to adjust a cooling liquid supply speed.

## Description

### RELATED APPLICATION

This application claims priority to Chinese Patent Application No. 202111461756.2, filed on December 2, 2021, the disclosure of which is incorporated by reference as part of the present application.

### TECHNICAL FIELD

The present application belongs to the technical field of manufacturing of charging equipment, and specifically relates to a terminal cooling structure and a cooling system for a direct-current charging device.

### BACKGROUND

With the gradual popularization of electric vehicles, the market for new energy vehicles is increasing, and charging equipment closely related to them has become particularly important. When a new energy vehicle is charged, the temperature of terminals will rise sharply. The high temperature will bring about potential safety hazards and cause burns and scalds of persons and even accidents such as vehicle bursting into flames. Moreover, the high temperature may limit charging power. The higher the charging power is, the more severe the heat generation is. When the charging power is too low, charging time will be prolonged, thereby increasing time costs of users. In addition, the high temperature will shorten the service life of the terminals and bring about high maintenance costs. Current terminal cooling may be liquid cooling, but although cylindrical cavities with a small diameter for liquid cooling are disposed inside the terminals, effective circulation cannot be formed, so heat can only be dissipated through conduction instead of circulation, resulting in low heat dissipation efficiency. Therefore, a new solution is urgently needed in the prior art to solve the above problems.

### SUMMARY

To improve the cooling efficiency of terminals, the present application provides a terminal cooling structure and a cooling system for a direct-current charging device, which can quickly and effectively reduce the temperature of the terminals.

To solve the technical problems, the present application adopts the following technical solutions.

In an aspect, an embodiment of the present application provides a terminal cooling structure, including a connecting tube, a conductive terminal, and a cooling tube, where the conductive terminal has a sealed cavity, and at least one end of the cooling tube is disposed in the sealed cavity; and at least two conductive terminals are provided, the sealed cavity of each conductive terminal is provided with a connecting hole, and the connecting holes communicate with each other by the connecting tube.

In another aspect, an embodiment of the present application provides a cooling system for a direct-current charging device, including the terminal cooling structure according to the embodiment in the first aspect, an input pump, a cooling medium, and a cooling device, where the two conductive terminals are a positive conductive terminal and a negative conductive terminal respectively; and the cooling tube in one of the positive conductive terminal and the negative conductive terminal is an input tube, the cooling tube in the other of the positive conductive terminal and the negative conductive terminal is an output tube, the input tube is connected to the input pump, the cooling device has one end connected to the output tube and the other end connected to the input pump, and the input pump is configured to input the cooling medium to the input tube.

The present application has the following beneficial effects: the cooling tubes are disposed in the at least two conductive terminals, and the sealed cavities are connected to each other by water pipe joints, such that the terminal cooling structure forms a complete loop and may quickly and effectively reduce the temperature of the terminals. With the structure in which cooling liquid enters the sealed cavity from an end opening of the cooling tube and flows out of the sealed cavity from the connecting tube, the contact between the cooling liquid and the inside of the conductive terminal is more sufficient, achieving higher cooling efficiency. With the water pipe joints, the connecting tube can be mounted more conveniently and sealed more completely. A temperature sensor can monitor the cooling effect on the conductive terminals, and can provide a reference for a worker to adjust a cooling liquid supply speed.

### BRIEF DESCRIPTION OF DRAWINGS

The accompanying drawings in the specification that constitute a part of this application are used for providing a further understanding of this application. Schematic embodiments of this application and their descriptions are used for explaining this application, and do not constitute an improper limitation to this application.
FIG. 1 is a schematic structural diagram of a terminal cooling structure according to the present application;
FIG. 2 is a sectional view of a terminal cooling structure according to the present application;
FIG. 3 is a schematic structural diagram of a terminal cooling structure with two conductive terminals according to the present application;
FIG. 4 is a schematic structural diagram of water pipe joints of a terminal cooling structure according to the present application;
FIG. 5 is a schematic structural diagram of a bent section of a terminal cooling structure according to the present application; and
FIG. 6 is a schematic structural diagram of a division board of a terminal cooling structure according to the present application.

### DETAILED DESCRIPTION

It should be noted that, in the absence of a conflict, embodiments of this application can be combined with features in the embodiments. This application will be described in detail below with reference to the drawings and in conjunction with embodiments.

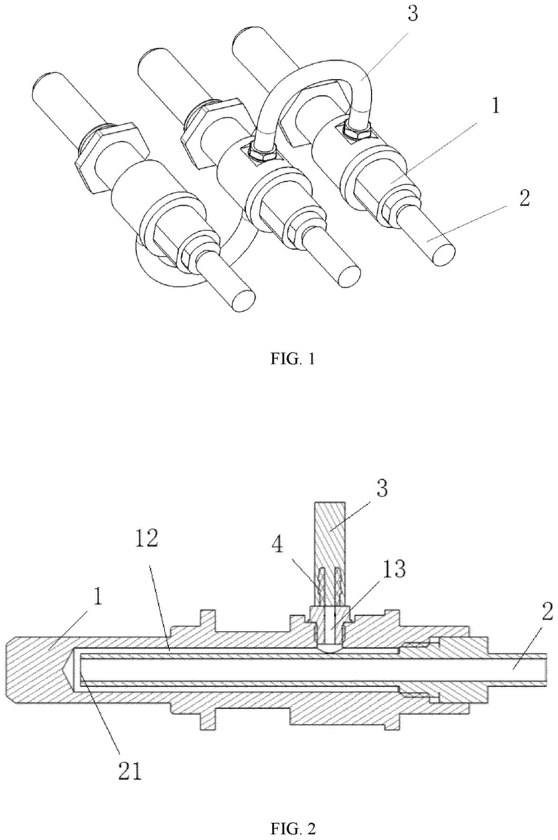

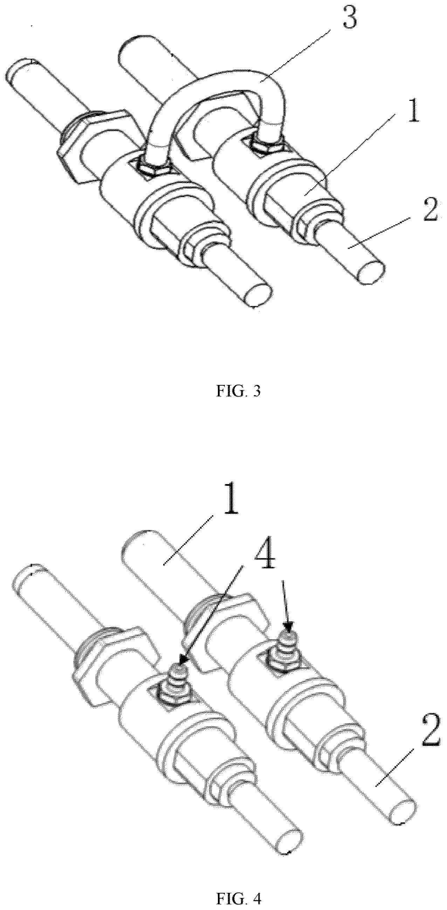

In an aspect, an embodiment of the present application provides a terminal cooling structure, as shown in FIG. 1 to FIG. 3, including a connecting tube 3, a conductive terminal 1, and a cooling tube 2. The conductive terminal 1 has a sealed cavity 12, and at least one end of the cooling tube 2 is disposed in the sealed cavity 12. At least two conductive terminals 1 are provided, each conductive terminal 1 is provided with a connecting hole 13, and the connecting holes 13 communicate with each other by the connecting tube 3. Two terminals are used as an example. As shown in FIG. 3, the cooling tube 2 has one end located in the sealed cavity 12 and the other end located outside the sealed cavity 12. Cooling liquid or cooling gas enters the sealed cavity 12 of one conductive terminal 1 from one cooling tube 2, enters the sealed cavity 12 of the other conductive terminal 1 from the connecting hole 13 of the sealed cavity 12 through the connecting tube 3, and then flows out of the cooling tube 2 in the sealed cavity 12. The cooling liquid or the cooling gas is cooled by cooling equipment and then enters the cooling tube 2 to form a complete circulation process, thereby achieving the purpose of cooling the charging terminal 1. A sealing gasket may be disposed between the connecting tube 3 and the connecting hole 13 for a sealing connection therebetween, or the connecting tube 3 and the connecting hole 13 may be hermetically connected to each other by a sealant. The number of conductive terminals 1 may be three or more. The cooling liquid enters from the cooling tube 2 in one conductive terminal 1 and is outputted from the cooling tube 2 in another conductive terminal 1. Alternatively, the cooling liquid enters from the cooling tubes 2 in the plurality of conductive terminals 1 and is outputted from the cooling tube 2 in one conductive terminal 1.

In some embodiments, a cross section of the sealed cavity 12 and a cross section of the cooling tube 2 are both circular, and an inner diameter of the sealed cavity 12 is greater than an outer diameter of the cooling tube 2. The circular design is more convenient for insertion and pulling, and is not prone to causing damage to the surface of the sealed cavity 12. The cooling tube 2 has a smaller radius than the sealed cavity 12. The cooling liquid enters the sealed cavity 12 from the cooling tube 2 and then flows out of the sealed cavity 12 from the connecting tube 3. In addition, the section of the sealed cavity 12 and the section of the cooling tube 2 may also be in various shapes such as an oval shape and a polygonal shape designed as required.

In some embodiments, a ratio of a radius of the cross section of the sealed cavity 12 to a radius of the cross section of the cooling tube 2 is (1 : 0.25) to (1 : 0.92). If the cooling tube 2 is too thin, the supply of the cooling liquid will be insufficient. If the cooling tube 2 is too thick, a gap between the cooling tube 2 and the sealed cavity 12 is too small, and the insufficient cooling liquid flowing through the gap in unit time will also lead to insufficient cooling. In order to select the reasonable ratio of the radius of the cross section of the sealed cavity 12 to the radius of the cross section of the cooling tube 2, the inventor carries out related tests. In a test method, the same conductive terminals 1 are selected, where each conductive terminal 1 has the same sealed cavity 12; the cooling tubes 2 with different radii are selected; the temperatures of the conductive terminals 1 are measured; the acquired temperatures are collected, where the minimum temperature is an optimal temperature; absolute values of differences between all the temperatures and the optimal temperature are taken; and if the absolute values are greater than 0.5°C, the temperature differences are unqualified. Results are recorded in Table 1.

**Table 1: Influence of ratio of radius of cross section of sealed cavity to radius of cross section of cooling tube on cooling effect**

| | | | | | | | | | | | |
|---|---|---|---|---|---|---|---|---|---|---|---|
| Ratio | 1:0.23 | 1:0.25 | 1:0.32 | 1:0.40 | 1:0.50 | 1:0.58 | 1:0.66 | 1:0.73 | 1:0.85 | 1:0.92 | 1:0.94 |
| Temperature difference (°C) | 0.51 | 0.48 | 0.42 | 0.33 | 0.28 | 0.11 | 0. | 0.18 | 0.38 | 0.46 | 0.52 |

It can be seen from Table 1 that the best cooling effect is achieved when the ratio of the radius of the cross section of the sealed cavity 12 to the radius of the cross section of the cooling tube 2 is 1 : 0.66. When the ratio of the radius of the cross section of the sealed cavity 12 to the radius of the cross section of the cooling tube 2 is greater than 1 : 0.25 or less than 1 : 0.92, the temperature differences between the measured temperatures and the optimal temperature exceed 0.5°C. When the ratio of the radius of the cross section of the sealed cavity 12 to the radius of the cross section of the cooling tube 2 is less than or equal to 1 : 0.25 or greater than or equal to 1 : 0.92, the temperature differences between the measured temperatures and the optimal temperature are within 0.5°C and are all qualified. Therefore, the ratio of the radius of the cross section of the sealed cavity 12 to the radius of the cross section of the cooling tube 2 preferred by the inventor is (1 : 0.25) to (1 : 0.92).

In some embodiments, a cross section of the connecting tube 3 is circular, and a ratio of the radius of the cross section of the sealed cavity 12 to a radius of the cross section of the connecting tube 3 is (1 : 0.3) to (1 : 0.86). The reasonable ratio of the sealed cavity 12 to the cooling tube 2 contributes to sufficient flow of the cooling liquid, but the flow of the cooling liquid is also related to the connecting tube 3. In order to find the appropriate ratio of the radius of the cross section of the sealed cavity 12 to the radius of the cross section of the connecting tube 3, the inventor carries out related tests. In a test method, the same conductive terminals 1 are selected, where each conductive terminal 1 has the same sealed cavity 12; the connecting tubes 3 with different radii are selected; after power is on for a period of time, the temperatures of the conductive terminals 1 are measured; the acquired temperatures are collected, where the minimum temperature is an optimal temperature; absolute values of differences between all the acquired temperatures and the optimal temperature are taken; and if the absolute values are greater than 0.5°C, the temperature differences are unqualified. Results are recorded in Table 2.

**Table 2: Influence of ratio of radius of cross section of sealed cavity to radius of cross section of connecting tube on cooling effect**

| | | | | | | | | | | | |
|---|---|---|---|---|---|---|---|---|---|---|---|
| Ratio | 1:0.28 | 1:0.3 | 1:0.38 | 1:0.46 | 1:0.52 | 1:0.59 | 1:0.66 | 1:0.72 | 1:0.80 | 1:0.86 | 1:0.88 |
| Tempera ture differenc e (°C) | 0.52 | 0.48 | 0.41 | 0.35 | 0.27 | 0.21 | 0.15 | 0.1 | 0.03 | 0 | 0 |

As shown in Table 2, when the ratio of the radius of the cross section of the sealed cavity 12 to the radius of the cross section of the connecting tube 3 is greater than or equal to 1 : 0.86, the best cooling effect is achieved, and the temperature of the conductive terminal 1 is the optimal temperature. When the ratio of the radius of the cross section of the sealed cavity 12 to the radius of the cross section of the connecting tube 3 is less than 1 : 0.3, that is to say, when the connecting tube 3 is too thin, the cooling effect is insufficient, and the difference between the temperature of the conductive terminal 1 and the optimal temperature is greater than 0.5°C. Therefore, the inventor chooses that the maximum ratio of the radius of the cross section of the sealed cavity 12 to the radius of the cross section of the connecting tube 3 is 1 : 0.3. When the ratio is less than 1: 0.86, it is meaningless to continue to increase the radius of the connecting tube 3, and it is difficult to increase the radius of the connecting tube 3 due to the limitation of the radius of the conductive terminal 1 itself. Therefore, the ratio of the radius of the cross section of the sealed cavity 12 to the radius of the cross section of the connecting tube 3 preferred by the inventor is (1 : 0.3) to (1 : 0.86).

In some embodiments, the sealed cavity 12 and the cooling tube 2 are concentrically disposed. In this way, the cooling liquid is in contact with all parts of the sealed cavity 12 more uniformly, which can achieve the better cooling effect.

In some embodiments, the sealed cavity 12 and the cooling tube 2 are integrally formed. An integrally formed connecting position may be at a joint where the cooling tube 2 is inserted into the sealed cavity 12. The integral forming can achieve better sealing effect and can avoid liquid leakage or air leakage caused by the joint.

In some embodiments, one end of the cooling tube 2 disposed in the sealed cavity 12 is an inner end opening 21, and a ratio of a distance between the inner end opening 21 and the connecting hole 13 to a length of the sealed cavity 12 is (0.35 : 1) to (0.9 : 1). The longer the distance between the inner end opening 21 and the connecting hole 13 is, the longer the distance the cooling liquid flows in the sealed cavity 12 is, and the better the cooling effect on the conductive terminal 1 is. However, it is also needed to consider whether the connecting hole 13 can be provided. In order to select the reasonable ratio of the distance between the inner end opening 21 and the connecting hole 13 to the length of the sealed cavity 12, the inventor carries out related tests. In a test method, the same conductive terminals 1 are selected, where each conductive terminal 1 has the same sealed cavity 12; the cooling tubes 2 with the same radius are selected, where the distances between the inner end openings 21 of the cooling tubes 2 and the connecting holes 13 are different; the temperatures of the conductive terminals 1 are measured, where the minimum temperature is an optimal temperature; absolute values of differences between all the measured temperatures and the optimal temperature are taken; and if the absolute values are greater than 0.5°C, the temperature differences are unqualified. Results are recorded in Table 3.

**Table 3: Influence of ratio of distance between inner end opening 21 and connecting hole 13 to length of sealed cavity 12 on cooling effect**

| | | | | | | | | | | | |
|---|---|---|---|---|---|---|---|---|---|---|---|
| Ratio | 0.32:1 | 0.35:1 | 0.43:1 | 0.51:1 | 0.58:1 | 0.66:1 | 0.72:1 | 0.78:1 | 0.85:1 | 0.9:1 | 0.92:1 |
| Temperature difference (°C) | 0.51 | 0.48 | 0.42 | 0.33 | 0.28 | 0.23 | 0.19 | 0.12 | 0.1 | 0 | 0 |

It can be seen from Table 3 that the best cooling effect and the optimal temperature are achieved when the ratio of the distance between the inner end opening 21 and the connecting hole 13 to the length of the sealed cavity 12 is greater than 0.9 : 1. When the ratio of the distance between the inner end opening 21 and the connecting hole 13 to the length of the sealed cavity 12 is less than 0.32 : 1, the temperature differences between the measured temperatures and the optimal temperature exceed 0.5°C. When the ratio of the distance between the inner end opening 21 and the connecting hole 13 to the length of the sealed cavity 12 is greater than or equal to 0.35 : 1, the temperature differences between the measured temperatures and the optimal temperature are within 0.5°C and are all qualified. When the ratio of the distance between the inner end opening 21 and the connecting hole 13 to the length of the sealed cavity 12 is greater than or equal to 0.9 : 1, there are no differences between the measured temperatures and the optimal temperature. When the ratio of the distance between the inner end opening 21 and the connecting hole 13 to the length of the sealed cavity 12 is greater, it is difficult to find an appropriate mounting position for the connecting tube 3. Therefore, the ratio of the distance between the inner end opening 21 and the connecting hole 13 to the length of the sealed cavity 12 preferred by the inventor is (0.35 : 1) to (0.9 : 1). In order to achieve such ratio, there may be two options. In one option, as shown in FIG. 2, the inner end opening 21 is close to an innermost part of the sealed cavity 12, but is not attached to the sealed cavity 12 to allow the cooling liquid to flow out, and the connecting hole 13 is disposed as far away from the inner end opening 21 as possible, so as to achieve sufficient contact between the cooling liquid and the sealed cavity 12. In the other option, the connecting hole 13 is disposed at a farthest part of the sealed cavity 12, and the inner end opening 21 is disposed at a position just entering into the sealed cavity 12, which can also achieve sufficient contact between the cooling liquid and the sealed cavity 12, but there may be some cases where the cooling liquid does not flow sufficiently, so the inventor prefers the first disposal manner.

In some embodiments, a liquid leakage sensor is disposed on a surface of the conductive terminal 1. Once the liquid leaks from the sealed cavity 12, the liquid leakage sensor will detect it and transmit liquid leakage information through a data line, and a worker may deal with the case immediately. The specific liquid leakage sensor may be a water leakage sensing rope.

In some embodiments, a liquid leakage sensor is disposed in the sealed cavity 12. The liquid leakage sensor may determine whether the sealed cavity leaks by monitoring the pressure intensity, pressure, flow rate or flow velocity in the sealed cavity 12. When an abnormality occurs, the worker can know the abnormality through the liquid leakage sensor and deal with it in time.

In some embodiments, a water pipe joint 4 is disposed on the connecting hole 13. As shown in FIG. 4, the connecting tube 3 is sleeved on the water pipe joint 4. The water pipe joint 4 has one end communicating with the connecting hole 13 and the other end communicating with the connecting tube 3. The water pipe joint 4 disposed separately can be connected to the connecting hole 13 more easily and sealed more easily.

Further, one or more protrusions are disposed at a periphery of the water pipe joint 4, the connecting tube 3 is made of an elastic material, and the water pipe joint 4 is in interference fit with the connecting tube 3. The connecting tube 3 may be made of a rubber material and is in interference fit with the protrusions on the water pipe joint 4 to achieve the sealing effect.

Furthermore, the protrusions are barb-shaped. As shown in FIG. 2, the barb shape can increase the strength of contact between the protrusion and the water pipe joint 4, achieving a better sealing effect.

In some embodiments, an external thread is formed on the water pipe joint 4, and the connecting tube 3 is in screw connection with the water pipe joint 4. A nut sleeved with the connecting tube 3 may be disposed on the connecting tube 3. The nut is rotatable to be screwed on the external thread. A sealing ring may be disposed between the water pipe joint 4 and the nut to improve the leakage-proof performance.

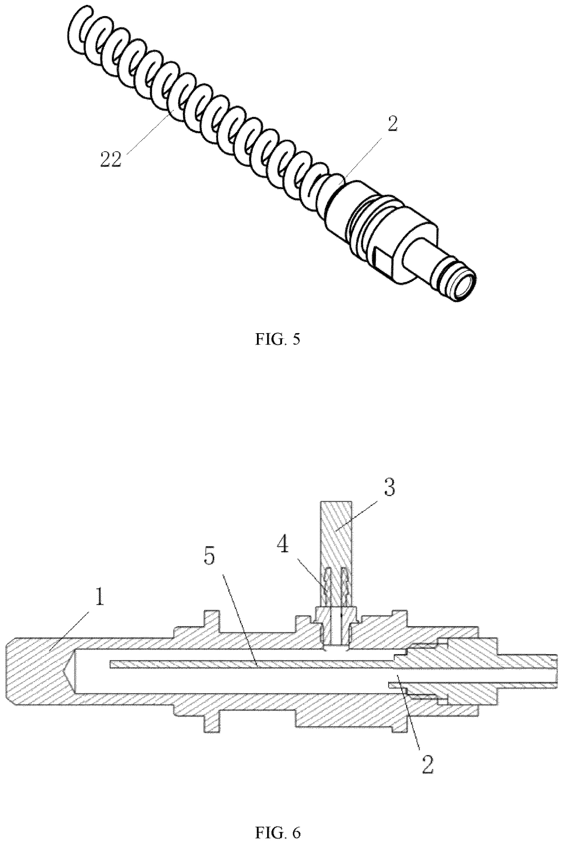

In some embodiments, the cooling tube 2 includes a bent section 22 disposed in the sealed cavity 12. As shown in FIG. 5, when the cooling tube 2 is made of a hard material, a part of the cooling tube 2 may be designed as the bent section 22. The bent section 22 can increase the length of the cooling tube 2 in the sealed cavity, thereby improving the cooling effect.

In some embodiments, the bent section 22 is helical. The helical shape can enable the cooling liquid inside the cooling tube 2 and the cooling liquid outside the cooling tube 2 to be in contact more sufficiently and exchange heat more uniformly.

In some embodiments, a percentage of a length of the bent section 22 in a total length of the cooling tube 1 in the sealed cavity 12 is 10-100%. That is to say, the whole or only part of the cooling tube 1 in the sealed cavity 12 may be the bent section 22. If the bent section 22 is too short, it is not very helpful to improve the cooling effect. Therefore, the inventor carries out related tests to select the appropriate length of the bent section 22 in the cooling tube 1 in the sealed cavity 12. In a test method, the same conductive terminals 1 are selected; different percentages of the bent sections 22 are provided; the temperatures are measured; the measured temperatures are compared with an optimal temperature; absolute values of differences between all the measured temperatures and the optimal temperature are taken; and if the absolute values are greater than 0.5°C, the temperature differences are unqualified. Results are as shown in FIG. 4.

**Table 4: Influence of percentage of length of bent section in total length of cooling tube in sealed cavity on cooling effect**

| | | | | | | | | | | | |
|---|---|---|---|---|---|---|---|---|---|---|---|
| Percentage (%) | 8% | 10% | 20 | 30 | 40 | 50 | 60 | 70 | 80 | 90 | 100 |
| Temperature difference (°C) | 0.51 | 0.48 | 0.45 | 0.33 | 0.28 | 0.22 | 0.15 | 0.1 | 0 | 0 | 0 |

It can be seen from Table 4 that the optimal temperature is achieved when the percentage of the length of the bent section 22 in the total length of the cooling tube 2 in the sealed cavity 12 is greater than or equal to 80%. It can also be seen that the differences between the measured temperatures and the optimal temperature are greater than 0.5°C when the percentage of the length of the bent section 22 in the total length of the cooling tube 2 in the sealed cavity 12 is less than 10%. Therefore, the percentage of the length of the bent section 22 in the total length of the cooling tube 2 in the sealed cavity 12 preferred by the inventor is 10% to 100%.

In some embodiments, a division board 5 is disposed in the sealed cavity 12. As shown in FIG. 6, the division board 5 divides the sealed cavity into two accommodating cavities in communication with each other, the cooling tube is disposed in one accommodating cavity, and the connecting hole 13 is formed on the other accommodating cavity. The cooling liquid in the cooling tube 2 only enters one accommodating cavity, then enters the other accommodating cavity from a joint of the two accommodating cavities, and then enters the other conductive terminal 1 from the connecting hole 13 and the connecting tube 3.

In some embodiments, an inlet is formed at a joint between the sealed cavity 12 and the cooling tube, and a communicating part of the two accommodating cavities is located in an end of the sealed cavity farthest from the inlet. That is to say, the flow stroke of the cooling liquid in the two accommodating cavities is increased as much as possible to achieve better cooling effect.

In some embodiments, a length of the cooling tube 2 in the accommodating cavity is less than or equal to 5 cm. When the communicating part is far away from the inlet, the length of the cooling tube 2 in the accommodating cavity is reduced as much as possible to increase the flow distance of the cooling liquid. In order to verify the influence of the length of the cooling tube 2 in the accommodating cavity on the cooling effect, the inventor carries out related tests. The same conductive terminals 1 are selected, where the accommodating cavities in each conductive terminal 1 are the same; after the conductive terminals 1 are powered on for a period of time, the inventor measures the temperatures of the conductive terminals 1 having the cooling tubes 2 with different lengths in the accommodating cavities, where the minimum temperature is an optimal temperature; absolute values of differences between all the measured temperatures and the optimal temperature are taken; and if the absolute values are greater than 0.5°C, the temperature differences are unqualified. Results are reported in Table 5.

**Table 5: Influence of length of cooling tube in accommodating cavity on cooling effect**

| | | | | | | | | | | | |
|---|---|---|---|---|---|---|---|---|---|---|---|
| Length (cm) | 5.2 | 5 | 4.6 | 4.1 | 3.6 | 3.2 | 2.5 | 1.8 | 1.2 | 0.5 | 0 |
| Temperature difference (°C) | 0.51 | 0.48 | 0.42 | 0.33 | 0.28 | 0.23 | 0.19 | 0.12 | 0.1 | 0 | 0 |

It can be seen from Table 5 that the best cooling effect and the optimal temperature are achieved when the length of the cooling tube 2 in the accommodating cavity is less than or equal to 0.5 cm. When the length of the cooling tube 2 in the accommodating cavity is greater than 5.2 cm, the temperature differences between the measured temperatures and the optimal temperature exceed 0.5°C. When the length of the cooling tube 2 in the accommodating cavity is less than or equal to 5 cm, the temperature differences between the measured temperatures and the optimal temperature are not greater than 0.5°C. Therefore, the length of the cooling tube 2 in the accommodating cavity preferred by the inventor is less than or equal to 0.5 cm.

In some embodiments, a temperature sensor is disposed on the conductive terminal 1. The temperature sensor can monitor the operating temperature of the conductive terminal 1 in real time, so that the worker can adjust a cooling liquid supply speed based on the measured operating temperature to achieve higher cooling efficiency. In this embodiment, the temperature sensor is a negative temperature coefficient (NTC) sensor or a negative temperature coefficient (PTC) sensor. The advantages of using the two types of temperature sensors are that the size is small and gaps that cannot be measured by other thermometers can be measured; the use is convenient and the resistance may be arbitrarily selected within a range of 0.1 kΩ to100 kS2; and they are easily processed to be in complex shapes, may be produced in large quantities, have good stability and strong overload capacity, and are applicable to products requiring small size and stable performance such as adapters.

The temperature sensor may be disposed inside or outside the conductive terminal 1, and is exemplarily disposed at a flowing end in the conductive terminal 1. At this time, the temperature of the cooling liquid has been increased after the previous cooling, and the cooling effect has been reduced. The temperature of the terminal at this position is more likely to exceed an early warning value, so the best effect can be achieved by disposing the temperature sensor at this position.

The present application further discloses a cooling system for a direct-current charging device, including the terminal cooling structure as described above, an input pump, a cooling medium, and a cooling device.

The two conductive terminals 1 are a positive conductive terminal and a negative conductive terminal respectively. The cooling tube 2 in one of the positive conductive terminal and the negative conductive terminal is an input tube, and the cooling tube in the other of the positive conductive terminal and the negative conductive terminal is an output tube. The input tube is connected to the input pump, the cooling device has one end connected to the output tube and the other end connected to the input pump, and the input pump is used to input the cooling medium to the input tube. A case where the input tube is disposed in the positive conductive terminal and the output tube is disposed in the negative conductive terminal is used as an example. The input pump drives the cooling medium to enter the input tube; the cooling medium enters the sealed cavity 12 of the positive conductive terminal from the inner end opening 21, then enters the sealed cavity 12 of the negative conductive terminal from the connecting hole 13 through the water pipe joint 4 and the connecting tube 3, flows out through the output tube in the negative conductive terminal, and enters the cooling device; the cooling device cools the cooling medium; and the input pump inputs the cooled cooling medium to the input tube, to complete the entire cooling circulation. The cooling device may be cooling fins or other cooling equipment.

In some embodiments, the cooling medium is cooling gas, cooling liquid, or cooling solid. The cooling gas may be obtained in a manner that refrigerated air is blown into the cooling tube 2 and then enters the sealed cavity 12 to be cooled. The cooling liquid may include one or more selected from insulating water, ethylene glycol, castor oil, coconut oil, corn oil, cottonseed oil, linseed oil, olive oil, palm oil, peanut oil, grapeseed oil, rapeseed oil, safflower oil, sunflower oil, soybean oil, high oleic acid variants of various vegetable oils, 4-decenoic acid, decenoic acid, lauroleic acid, linderic acid, tetradecenoic acid, physeteric acid, tsuzuic acid, palmitoleic acid, petroselic acid, oleic acid, octadecenoic acid, gadoleic acid, gondoic acid, cetoleic acid, erucic acid, nervonic acid, glycerin, transformer oil, axle oil, internal combustion engine oil, and compressor oil. An additive may also be added into the cooling liquid, where the additive is selected from one or more selected from an antioxidant, a pour point depressant, a corrosion inhibitor, an antibacterial agent, and a viscosity modifier. Cooling oil has the advantages of sensitive thermal balance, super good thermal conductivity, ultra wide operating temperature range, no boiling, micro pressure of the cooling system, no need to add an antifreeze in a low temperature environment, no corrosion damage such as gas etching, scale, and electrolysis, etc. The cooling solid may be dry ice or the like. The dry ice is used as an example. The dry ice is disposed in the sealed structure 12, and refrigeration equipment is applied outside the conductive terminal 1 and provides a cold source to maintain a solid state of the dry ice, so as to cool the conductive terminal 1.

In an exemplary embodiment, a cooling rate of the cooling medium is greater than or equal to 0.5°C/min. The cooling rate of the cooling medium is related to not only the material of the cooling medium itself but also the supply speed of the cooling medium. To verify the influence of the cooling rate of the cooling medium on the temperature rise of the conductive terminal 1, ten conductive terminals 1 with the same sectional area, material and length are selected by the inventor and applied with the same current, cooling mediums with different cooling rates are used to cool the conductive terminals 1, and temperature rises of the conductive terminals 1 are read and recorded in Table 6.

In a test method, in a closed environment, conductive terminals 1 using cooling mediums with different cooling rates are applied with the same current, temperatures before power on and stable temperatures after power on are recorded, and absolute values of differences are taken. In this embodiment, the temperature rise of less than 50 K is a qualified value.

**Table 6: Influence of cooling mediums with different cooling rates on temperature rises of conductive terminals 1**

| Cooling rate (°C/min) of cooling medium | | | | | | | | | | | | |
|---|---|---|---|---|---|---|---|---|---|---|---|---|
| 0.01 | 0.03 | 0.05 | 0.1 | 0.3 | 0.5 | 1 | 2 | 3 | 4 | 5 | 6 | 7 |

| Temperature rise (K) of charging terminal | | | | | | | | | | | | |
|---|---|---|---|---|---|---|---|---|---|---|---|---|
| 63.8 | 58.5 | 55.5 | 52.7 | 50.2 | 48.6 | 41.4 | 37.1 | 33.2 | 30.8 | 27.5 | 26.8 | 26.5 |

It can be seen from the above Table 6 that when the cooling rate of the cooling medium is less than 0.5°C/min, the temperature rise of the conductive terminal 1 is unqualified, and the higher the cooling rate of the cooling medium is, the lower the temperature rise of the conductive terminal 1 is. Therefore, the cooling rate of the cooling medium is set by the inventor to be greater than or equal to 0.5°C/min.

The above are only specific embodiments of the present application, and cannot be used to limit the scope of implementation of the utility model. Therefore, the replacement of equivalent components, or equivalent changes and modifications made in accordance with the scope of patent protection of the present application, shall still fall within the scope of the present patent. Additionally, in the present application, the technical features may be freely combined with each other for use, the technical features may be freely combined with the technical solutions for use, and the technical solutions may be freely combined with each other for use.

## Claims

1. A terminal cooling structure, comprising a connecting tube, conductive terminals, and a cooling tube, wherein the conductive terminals have sealed cavities, and at least one end of the cooling tube is disposed in the sealed cavity; and
at least two conductive terminals are provided, the sealed cavity of each of the conductive terminals is provided with a connecting hole, and the connecting holes communicate with each other by the connecting tube.

2. The terminal cooling structure according to claim 1, wherein a cross section of the sealed cavity and a cross section of the cooling tube are both circular, and an inner diameter of the sealed cavity is greater than an outer diameter of the cooling tube.

3. The terminal cooling structure according to claim 2, wherein a ratio of a radius of the cross section of the sealed cavity to a radius of the cross section of the cooling tube is (1 : 0.25) to (1 : 0.92).

4. The terminal cooling structure according to claim 2, wherein a cross section of the connecting tube is circular, and a ratio of the radius of the cross section of the sealed cavity to a radius of the cross section of the connecting tube is (1 : 0.3) to (1 : 0.86).

5. The terminal cooling structure according to claim 2, wherein the sealed cavity and the cooling tube are concentrically disposed.

6. The terminal cooling structure according to claim 1, wherein the sealed cavity and the cooling tube are integrally formed.

7. The terminal cooling structure according to claim 1, wherein one end of the cooling tube disposed in the sealed cavity is an inner end opening, and a ratio of a distance between the inner end opening and the connecting hole to a length of the sealed cavity is (0.35 : 1) to (0.9 : 1).

8. The terminal cooling structure according to claim 1, wherein a liquid leakage sensor is disposed on a surface of the conductive terminal.

9. The terminal cooling structure according to claim 1, wherein a liquid leakage sensor is disposed in the sealed cavity.

10. The terminal cooling structure according to claim 1, wherein a water pipe joint is disposed on the connecting hole, and the connecting tube is sleeved on the water pipe joint.

11. The terminal cooling structure according to claim 10, wherein one or more protrusions are disposed at a periphery of the water pipe j oint, the connecting tube is made of an elastic material, and the water pipe j oint is in interference fit with the connecting tube.

12. The terminal cooling structure according to claim 11, wherein the protrusion is barb-shaped.

13. The terminal cooling structure according to claim 10, wherein an external thread is formed on the water pipe joint, and the connecting tube is in screw connection with the water pipe joint.

14. The terminal cooling structure according to claim 1, wherein the cooling tube comprises a bent section disposed in the sealed cavity.

15. The terminal cooling structure according to claim 14, wherein the bent section is helical.

16. The terminal cooling structure according to claim 14, wherein a percentage of a length of the bent section in a total length of the cooling tube in the sealed cavity is 10% to100%.

17. The terminal cooling structure according to claim 1, wherein a division board is disposed in the sealed cavity and divides the sealed cavity into two accommodating cavities that are in communication with each other, the cooling tube is disposed in one of the accommodating cavities, and the connecting hole is formed on the other of the accommodating cavities.

18. The terminal cooling structure according to claim 17, wherein an inlet is formed at a joint between the sealed cavity and the cooling tube, and a communicating part of the two accommodating cavities is located in an end of the sealed cavity farthest from the inlet.

19. The terminal cooling structure according to claim 18, wherein a length of the cooling tube in the accommodating cavity is less than or equal to 5 cm.

20. The terminal cooling structure according to claim 1, wherein a temperature sensor is disposed on the conductive terminal.

21. A cooling system for a direct-current charging device, comprising the terminal cooling structure according to any one of claims 1 to 20, an input pump, a cooling medium, and a cooling device,
wherein the two conductive terminals are a positive conductive terminal and a negative conductive terminal respectively; and the cooling tube in one of the positive conductive terminal and the negative conductive terminal is an input tube, the cooling tube in the other of the positive conductive terminal and the negative conductive terminal is an output tube, the input tube is connected to the input pump, the cooling device has one end connected to the output tube and the other end connected to the input pump, and the input pump is configured to input the cooling medium to the input tube.

22. The cooling system for a direct-current charging device according to claim 21, wherein the cooling medium is cooling gas, cooling liquid, or cooling solid.

23. The cooling system for a direct-current charging device according to claim 21, wherein a cooling rate of the cooling medium is greater than or equal to 0.5°C/min.
